# EUROPEAN PATENT SPECIFICATION

(11) **EP 1 781 915 B1**
(45) Date of publication and mention of the grant of the patent: **18.02.2009**
(21) Application number: 05772192.0
(22) Date of filing: 10.08.2005
(51) Int. Cl.: F02C 7/27, B64D 41/00

(54) **COMPRESSED-AIR GENERATING SYSTEM**
DRUCKLUFTHERSTELLUNGSSYSTEM
SYSTEME GENERATEUR D'AIR COMPRIME

(30) Priority: 11.08.2004 DE 102004039019; 11.08.2004 US 600502 P
(43) Date of publication of application: 09.05.2007
(73) Proprietor: Airbus Deutschland GmbH, 21129 Hamburg (DE)
(72) Inventor: JÖRN, Paul, J., 22763 Hamburg (DE)
(74) Representative: Kopf, Korbinian Paul
(86) International application number: PCT/EP2005/008691
(87) International publication number: WO 2006/015857

(56) References cited:
- DE-B- 1 088 766
- FR-A- 2 792 060
- GB-A- 615 689
- GB-A- 635 195
- US-A- 2 664 710
- US-A- 2 994 194

## Description

This application claims the benefit of the filing date of United States Provisional Patent Application No 60/600,502 filed August 11, 2004 and of the German Patent Application No 10 2004 039 019.3 filed August 11, 2004, the disclosures of which are herby incorporated by reference.

The invention relates to a system for generating compressed-air, in particular a system for generating compressed-air from superheated steam for feeding into a compressed-air system of an aircraft and for starting a gas turbine, for example of an aircraft engine.

Gas turbines have to be brought up to rotate at sufficient speed before the pressure rate is sufficient for operating a gas turbine by means of a fuel. Nowadays gas turbines are predominantly started by a mechanical drive, which is for example driven by way of an electrical starter motor, or they are started pneumatically.

However, self-sufficient electrical starting of a gas turbine, for example of an aircraft engine, requires a very high electrical power and a heavyweight starter motor. A pneumatic starting procedure requires a very high air-pressure output which may not be available with a mobile unit.

Document DE 1 088 766 describes a system with a steam generator where hydrogen peroxide is decomposed by the means of a catalytic process and wherein the steam is supplied to a turbine wheel for starting a gas turbine. GB 635,195 describes a device to start a gas turbine wherein fuel is burned in a combustion chamber to generate heat that is supplied to a boiler or heat exchanger where steam is generated.

It may be an object of the invention to create a system with which it is easily possible to support the start-up process of a gas turbine, for example of an aircraft engine.

A possible solution of said object may be disclosed in the independent claims. Advantageous embodiments of the invention are stated in the dependent claims.

An exemplary embodiment of the system according to the invention is characterised by the use of a steam generator, in particular a hydrogen/oxygen steam generator with which sufficiently high steam pressures and outputs can be generated. This steam or the hot mix comprising steam and supplied air can then be used for starting gas turbines, for example aircraft turbines. This makes it possible to do without the hitherto used starting auxiliaries, for example a starter motor.

With the use of H₂/O₂ steam generators for starting the engines/gas turbines, due to the high power density, the aircraft weight may be reduced when compared to the electrical starter variant.

According to the invention, the steam generated by the H₂/O₂ steam generator is fed to a compressed-air generator, which comprises a steam turbine and a compressor, to generate an adequate amount of compressed-air that can be used for starting a stationary or mobile gas turbine, or which can be fed to a compressed-air system.

The principle of H₂/O₂ steam generators is simple and their power density is high so that a starter unit based thereon may be in particular used in areas in which light unit weight, good economy and quick response behaviour are required.

Instead of using pure oxygen in the H₂/O₂ steam generator it is also possible to use air or a mixture of air and oxygen. However, this is associated with a disadvantage in that NOx emissions increase.

According to the invention, substitution of a RAT (RAM Air Turbine) may be possible because it can be replaced by a combination of an H₂/O₂ steam generator and a turbine, which by way of a steam-driven turbine drives for example a generator, and/or generates hydraulics pressure and/or hot compressed-air. Thus, according to the invention weight savings and performance advantages may be achieved when compared to a conventional RAT.

Since H₂/O₂ steam generators are capable of generating high steam pressures and high outputs, according to another exemplary embodiment of the invention it is possible to use the steam that is generated by an H₂/O₂ steam generator for driving a steam turbine and in turn to use said steam turbine to drive a compressed-air generator for compressed-air systems. Possible applications may relate, for example, to compressed-air systems in a vehicle, for example in an aircraft. The system according to the invention may provide an advantage in particular if no external energy sources are available outside the vehicle, and if high performance is required.

The use of such steam generator systems according to the invention in aircraft may be, for example, possible in anti-icing systems (e.g. on aerofoils). Up to now such compressed-air systems were fed by hot compressed-air which was bled from behind the engines. These systems are not used during the entire flight but only in the climbing and descending phase when there is a danger of ice formation. However, the bleeding of compressed-air from the engines results in loss of engine performance, increased consumption and thus a higher takeoff weight of the aircraft. The efficiency obtained in anti-icing systems that are operated with compressed-air from the engines is low so that substitution and/or support of the systems by the system according to the invention may be sensible. In such an arrangement compressed-air is generated by way of a compressed-air generator operated with superheated steam (for example a steam turbine with a compressor). A further option may consist of mixing and/or cooling the superheated steam with air and of using said steam directly.

Due to the high efficiency of the system according to the invention, the weight of the anti-icing unit and of the entire aircraft may be reduced according to the invention. In this way the system's economy may be improved, and exhaust emissions can be reduced.

The compressed-air generated by the system according to the invention may also be used for other compressed-air systems, such as for example the air conditioning system, instead of using engine bleed air. In this arrangement, complete substitution or support (for example to cover peak loads: e.g. rapid decompression) of conventional systems is imaginable. According to the system according to the invention, compressed-air is generated by way of a compressed-air generator operated with superheated steam (for example a steam turbine with a compressor).

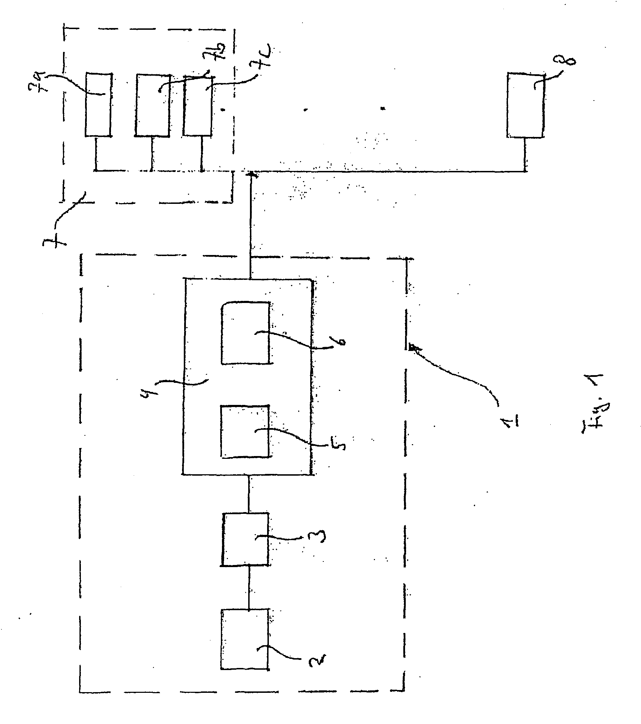

Below, with reference to a preferred embodiment, the system according to the invention is described with reference to Fig. 1. Fig. 1 shows a schematic block diagram of a preferred embodiment of the system according to the invention for use in an aircraft.

As shown in Fig. 1, the system 1 is characterised in particular in that an H₂/O₂ steam generator 2 generates superheated steam which is used to support a compressed-air system in an aircraft and a starter mechanism for starting an engine, as described below.

The H₂/O₂ steam generator 2 is generally known; it is primarily used for steam sterilisation, the temperature control of bioreactors, foodstuffs, packaging materials, medical instruments, textiles and solutions and also for pure-water generation in the pharmaceutical industry.

The H₂/O₂ steam generator 2 comprises/consists of a system in which hydrogen and oxygen (or air) react with each other in a controlled way to produce steam. In particular, an H₂/O₂ steam generator 2 produces a stoichiometric hydrogen/oxygen mixture according to the principle of rocket propulsion, which stoichiometric hydrogen/oxygen mixture is burnt up in a controlled way to form steam.

As shown in Fig. 1, the system further comprises a cooling unit 3 in order to feed water or air to the steam that has been generated, as a result of which a targeted setting of the state parameters of the pure steam becomes possible. By means of the cooling unit 3 the steam parameters can be set in a targeted way within a very short time. The advantages of this superheated-steam generator 2 are its high degree of purity, the short response times, the regulating options of the state parameters, and its small geometric dimensions.

According to the invention, by means of the H₂/O₂ steam generator 2 and the cooling means 3 a steam temperature, for example, of between 200° C and 3300° C can be set, for example in that water is injected, or air is admixed for cooling. According to the preferred embodiment shown in Fig. 1, the superheated steam which has been temperature-controlled in such a way is fed to a compressed-air generator 4. The compressed-air generator 4 comprises for example a steam turbine 5 with a compressor 6. The steam turbine 5 is operated with the superheated steam which is set to a predetermined temperature by means of the cooling means 3. As an alternative, the hot air generated by the H₂/O₂ steam generator can also be fed directly (without cooling) to the compressed-air generator 4. In this way, by means of the steam turbine 5 and the compressor 6, the compressed-air generator 4 generates compressed-air from the superheated steam.

The compressed-air generated by the compressed-air generator 4 is for example fed to a compressed-air system 7 which according to the invention, for example, comprises an anti-icing system 7 a, a hydraulics system 7 b, an air conditioning system 7c and the like.

As shown in Fig. 1, the compressed-air generated by the compressed-air generator 4 can also be used to bring an engine 8 to a rotary speed that is sufficient to result in a compressed-air ratio in the engine that allows operation of the engine with a fuel.

Although, above, the invention has been described with reference to a preferred embodiment in connection with an aircraft, it is understood that the system according to the invention can also be used in other vehicles that comprise a gas turbine which needs to be started. Furthermore, the system according to the invention can also be used in stationary gas turbines in order to start the gas turbine.

### List of reference characters

- 1: System
- 2: H₂/O₂ steam generator
- 3: Cooling system
- 4: Compressed-air generator
- 5: Steam turbine
- 6: Compressor
- 7: Compressed-air system
- 7 a: Anti-icing system
- 7 b: Hydraulics system
- 7 c: Air conditioning system
- 8: Gas turbine/engine

## Claims

1. A system for bringing a gas turbine to a sufficiently high rotary speed before the pressure rate in the gas turbine is sufficient for operating the gas turbine by means of a fuel, said system comprising a hydrogen/oxygen steam generator for generating steam,
**characterized by** a compressed-air generator for generating compressed-air from the steam; wherein said generated compressed-air is used for starting said gas turbine in order to bring it to said rotary speed.

2. The system of claim 1, wherein the compressed-air generator comprises a steam turbine and a compressor.

3. The system of claim 1 or 2, comprising a cooling unit for setting a desired temperature of the steam by feeding in water and/or air.

4. The system of any one of the preceding claims, wherein the generated compressed-air is fed to a compressed-air system of an aircraft.

5. The system of claim 4, wherein the compressed-air system is at least one of the following: an anti-icing system, a hydraulic system or an air conditioning system.

6. The use of the system of any one of claims 1 to 5 instead of, or in support of, an Auxiliary Power Unit and/or a RAM Air Turbine in an aircraft.

7. The use of the system according to any one of claims 1 to 5 instead of, or in support of an Auxiliary Power Unit in a vehicle.

## Patentansprüche

1. System zum Antreiben einer Gasturbine auf eine ausreichend hohe Drehzahl, bevor das Druckverhältnis in der Gasturbine ausreichend ist, um die Gasturbine mit einem Brennstoff zu betreiben, mit einem Wasserstoff/Sauerstoff-Dampferzeuger zum Erzeugen von Dampf,
**gekennzeichnet durch** einen Drucklufterzeuger zum Erzeugen von Druckluft aus dem Dampf; wobei die erzeugte Druckluft zum Starten der Gasturbine verwendet wird, um sie auf die genannte Drehzahl zu bringen.

2. System nach Anspruch 1, wobei der Dampferzeuger eine Dampfturbine und einen Kompressor aufweist.

3. System nach Anspruch 1 oder 2, aufweisend eine Kühleinheit zum Einstellen einer gewünschten Temperatur des Dampfes durch Zuführen von Wasser und/oder Luft.

4. System nach einem der vorhergehenden Ansprüche, bei dem die erzeugte Druckluft einem Druckluftsystem eines Flugzeugs zugeführt ist.

5. System nach Anspruch 4, wobei das Druckluftsystem wenigstens eines ist von einem Anti-Icing-System, einem Hydrauliksystem und einem Klimaanlagensystem.

6. Verwendung des Systems nach einem der Ansprüche 1 bis 5 anstelle oder zur Unterstützung einer APU (Auxiliary Power Unit) und/oder einer RAT (RAM Air Turbine) in einem Flugzeug.

7. Verwendung des Systems nach einem der Ansprüche 1 bis 5 anstelle oder zur Unterstützung einer APU (Auxiliary Power Unit) in einem Fahrzeug.

## Revendications

1. Système destiné à amener une turbine à gaz jusqu'à une vitesse de rotation suffisamment élevée avant que le taux de pression dans la turbine à gaz soit suffisant pour actionner la turbine à gaz au moyen d'un carburant, ledit système comportant un générateur de vapeur d'hydrogène/oxygène pour générer de la vapeur,
**caractérisé par** un générateur d'air comprimé destiné à générer de l'air comprimé à partir de la vapeur,
ledit air comprimé généré étant utilisé pour démarrer ladite turbine à gaz afin de l'amener à ladite vitesse de rotation.

2. Système selon la revendication 1, dans lequel le générateur d'air comprimé comporte une turbine à vapeur et un compresseur.

3. Système selon la revendication 1 ou 2, comportant une unité de refroidissement pour régler une température voulue de la vapeur en introduisant de l'eau et/ou de l'air.

4. Système selon l'une quelconque des revendications précédentes, dans lequel l'air comprimé généré est transféré dans un système à air comprimé d'un avion.

5. Système selon la revendication 4, dans lequel le système à air comprimé est au moins un des systèmes suivants : un système antigivrant, un système hydraulique ou un système de climatisation.

6. Utilisation du système selon l'une quelconque des revendications 1 à 5 en remplacement ou à l'appui d'un groupe auxiliaire de puissance et/ou d'une turbine à air RAM dans un avion.

7. Utilisation du système selon l'une quelconque des revendications 1 à 5 en remplacement ou à l'appui d'un groupe auxiliaire de puissance dans un véhicule.
